# EUROPEAN PATENT APPLICATION

(11) **EP 3 193 034 A1**
(43) Date of publication of application: **19.07.2017**
(21) Application number: 16203559.6
(22) Date of filing: 12.12.2016
(51) Int. Cl.: F16D 49/16, B28C 5/42, F16D 55/224, F16D 55/226, F16D 125/60, F16D 121/12, F16D 121/14

(54) **BRAKING ASSEMBLY FOR AN IN-TRANSIT MIXER**

(30) Priority: 17.12.2015 GB 201522283; 11.08.2016 GB 201613816
(71) Applicant: Hymix Ltd, Telford, Shropshire TF3 3AY (GB)
(72) Inventor: Humpish, Nicholas, Telford, Shropshire TF7 5BN (GB)
(74) Representative: Wynne-Jones, Lainé and James LLP

(57) **Abstract**

A braking assembly (36) for an in-transit mixer comprising a rotatable drum coupled to a drive system, the braking assembly comprising a brake member (44) arranged and configured for movement between a first position, in which it engages with a rotating element of said mixer so as to apply a braking force thereto, and a second position, in which it is disengaged from said rotating element, an actuating member located remotely from said brake member, and a transmission member coupling said actuating member to said brake member and configured such that actuation of said actuating member generates a mechanical force that is transmitted via said transmission member to said brake member (44) to move said braking member between said first and second positions.

## Description

This invention relates generally to an in-transit mixer or agitator and, more particularly, to a braking assembly for an in-transit mixer or agitator.

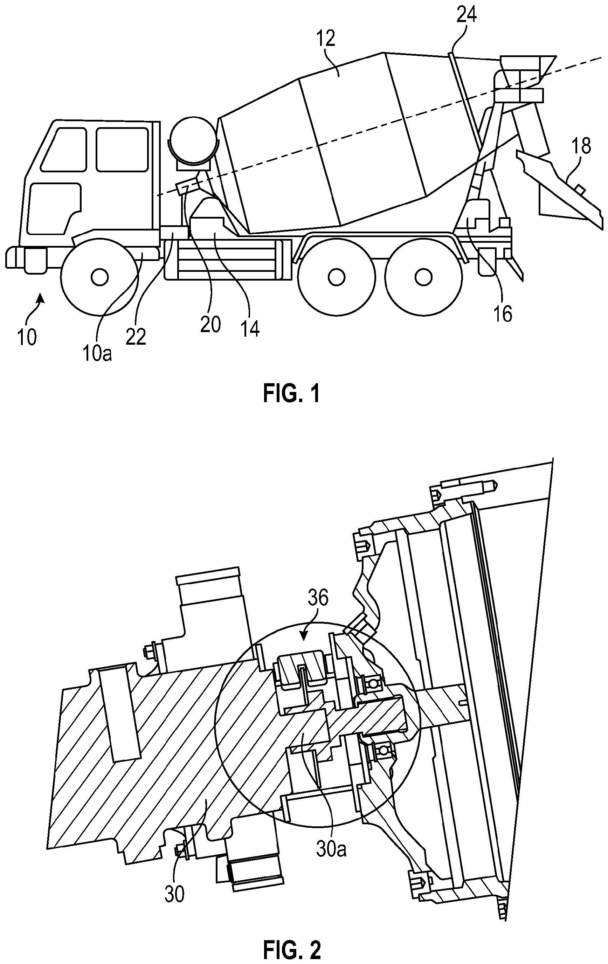

Ready-mix concrete is concrete that is manufactured in a factory or batching plant, according to a set recipe, and then delivered to work site, by truck mounted in-transit mixers. Referring to figure 1 of the drawings, a typical in-transit mixer, mounted on a truck 10, comprises a drum 12 mounted between front and rear supports 14, 16 on the rear flatbed of the truck. The drum 12 has a longitudinal axis A and is mounted at an angle with its axis A around 25-40° relative to the horizontal axis defined by the flatbed. The drum 12 is closed at the lower end (nearest the truck chassis 10a) and has an opposing open end, and the assembly includes, at least in some cases, a feed-in/feed-out device 18 for feeding concrete into, and removing concrete from, the drum 12 via the open end.

A hydraulic drive system 20, including a hydraulic motor and reduction gears is provided at the closed end of the drum 12 and configured, in use, to rotate the drum 12 about the axis A. The power take-off connection for the hydraulic drive system 20 is indicated generally at 22.

As will be known to a person skilled in the art, hydraulic motors have a drain connection for internal leakage, which means that when the power unit is switched off, the hydraulic motor in the drive system can move slowly if an external load is acting on it. There are many circumstances in which an operative may be required to access and even enter the inner drum cavity, for cleaning and inspection purposes for example. In theory, the drum will be in equilibrium (stationary) when it is empty. However, uneven distribution of solidified material within the drum cavity may make it unstable such that, when the truck engine is stopped and the power unit to the hydraulic drive system is switched off, the so-called back pressure in the hydraulic drive system can be progressively or suddenly released. If an operative is in or on the drum when this occurs, they can thus be seriously injured, sometimes fatally.

With a view to addressing this issue, numerous active safety measures have been proposed. For example, a recessed hole may be provided in the drum for receiving a bolting device, wherein a mating device is attached to the bolting device to prevent uncontrolled or unplanned movement of the empty drum. Other solutions comprise the provision of protrusions on the skin of the drum, which protrusions are configured to engage with cooperative captive devices and mechanisms to prevent undesired movement of the drum.

However, there are a number of significant problems associated with such solutions, as follows:
Firstly, such known solutions rely on the drum being stopped in a relatively precise orientation so that the locking components are correctly aligned, and it can take several attempts to get this right. Furthermore, the locking elements/holes can become filled with debris, making them difficult or impossible to use. Furthermore, known solutions, such as those described above, tend to limit the number of possible 'fixed' secure orientations, which may force operatives to work in less favourable conditions than they might otherwise choose. Still further, many such solutions require positive manual intervention, and the locks can be difficult or even dangerous to release. This is because the drum can move within the scope of the locking mechanism, such that any imbalance or changing balance of the drum results in the locking mechanism taking the resultant load, placing it under strain, such that considerable effort is required to release it and operatives can, for example, become trapped or otherwise injured as a result.

It is an object of the present invention to address at least some of these issues and, in accordance with a first aspect of the present invention, there is provided a braking assembly for an in-transit mixer comprising a rotatable drum coupled to a drive system, the braking assembly comprising a brake member arranged and configured for movement between a first position, in which it engages with a rotating element of said mixer so as to apply a braking force thereto, and a second position, in which it is disengaged from said rotating element, an actuating member located remotely from said brake member, and a transmission member coupling said actuating member to said braking member and configured such that actuation of said actuating member generates a mechanical force that is transmitted via said transmission member to said brake member to move said brake member between said first and second positions.

The brake member may comprise a brake shoe or calliper configured to frictionally engage with said rotary element when in the first position.

In an exemplary embodiment, the brake member may comprise a calliper located in or on the drive system, wherein the calliper is configured to frictionally engage with a rotary element of the drive system when in the first position. The calliper may, optionally, be arranged and configured to frictionally engage with the above-mentioned rotary element at any location on its circumference.

In an exemplary embodiment, the rotating element may comprise a power take-off shaft driving a water pump, and said brake member may be configured to, directly or indirectly, engage with and disengage from said power take-off shaft. For example, the brake member may be located adjacent to, and for selective engagement with and disengagement from, said shaft between a power take-off and said water pump.

The above-mentioned drive system may comprise a motor coupled via a shaft to a gear assembly, and wherein the braking assembly is located between the motor and the gear assembly. The braking assembly may comprise a drive coupling for coupling said shaft of said motor to said gear assembly. A brake disc may be provided substantially concentrically on the drive coupling, for rotation therewith, and a brake calliper may be arranged and configured to frictionally engage with the outer circumference of the brake disc in the first position.

The brake member may comprise a shoe or calliper configured for linear movement between the first and second positions in a direction substantially orthogonal to the axis of rotation of the shaft. Alternatively, the brake member may comprise a calliper comprising a pair of clamping members, connected at one end and defining a recess therebetween. The clamping members may be configured for opposing linear movement between the first and second positions in a direction generally parallel to the axis of rotation of the shaft.

The braking assembly may further comprise a housing mounted substantially concentrically about the shaft.

In an exemplary embodiment of the invention, the rotatable drum may comprise a circumferential track ring, and the braking assembly may comprise at least one brake member located adjacent said track ring and configured for linear movement between a first position is which it frictionally engages with the track ring and obstructs rotational movement of the drum, and a second position in which the brake member is disengaged from the track ring and the drum is free to rotate.

The braking assembly may comprise a pair of opposing brake members, located on each side of the drum adjacent the track ring, wherein the brake members may be configured for linear movement between a first position is which they frictionally engage with the track ring and obstruct rotational movement of the drum, and a second position in which the brake members are disengaged from the track ring and the drum is free to rotate.

In another exemplary embodiment, the braking assembly may comprise a circumferential flange or protrusion provided on, or formed integrally with, an outer wall of the drum, and a brake member arranged and configured for selective linear movement between a first position, in which it frictionally engages with the flange or protrusion and obstructs rotation of the drum, and a second position in which it is disengaged from the flange or protrusion and the drum is free to rotate.

The actuating member may comprise a manually operated mechanical operating member, wherein, in use, a mechanical force generated by actuation of said operating member is transmitted via said transmission member to said brake member to move said brake member between said first and second positions.

In an exemplary embodiment, the actuating member may be hydraulically or pneumatically operable.

In an exemplary embodiment, the braking assembly may comprise a control module or status detection module for generating a signal indicative of a status or condition of the in-transit mixer or vehicle, wherein the signal is transmitted to the actuating member and configured to operate the actuating member accordingly.

The brake member may be normally in the first position and the actuating member, when actuated, may be configured to move the braking member from the first position to the second position. Alternatively, the brake member may be normally in the second position and the actuating member, when actuated, may be configured to move the brake member from the second position to the first position.

In accordance with another aspect of the present invention, there is provided an in-transit mixer assembly comprising a rotatable drum, a drive system for rotating said drum and a braking assembly substantially as described above.

These and other aspects of the present invention will be apparent from the following specific description, in which embodiments of the present invention are described, by way of examples only, and with reference to the accompanying drawings, in which:
Figure 1 is a schematic side view of a typical truck mounted in-transit mixer;
Figure 2 is a schematic partial cross-sectional view of a drive system including a braking assembly according to an exemplary embodiment of the present invention;
Figure 3 is a schematic partial perspective view of a drive system including a braking assembly according to an exemplary embodiment of the present invention; and
Figure 4 is a schematic close-up cross-sectional view of the braking assembly identified by the circle C in Figure 2.

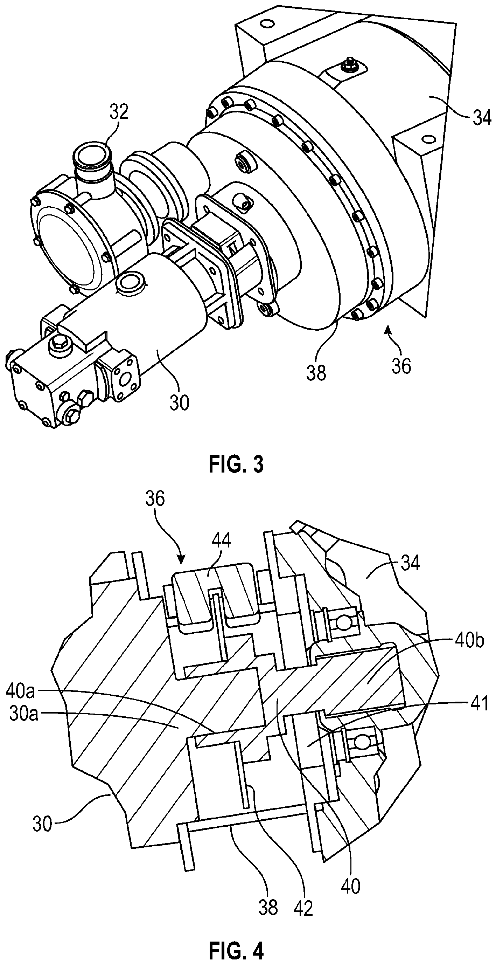

Referring to Figures 2 and 4 of the drawings, a typical truck mounted in-transit mixer may be driven by a hydraulic drive system comprising a hydraulic motor 30, having a drive shaft 30a, and a water pump 32. The water pump is driven by a PTO (power take-off) shaft which is part of the gearbox 34 (see below). It is optional and, although common in the United Kingdom, is somewhat rarer in other territories, including mainland Europe.

In a conventional drive system, the hydraulic motor 30 is coupled, via the drive shaft 30a, to a gearbox 34, such as a planetary gearbox, which, in turn, is coupled to the drum to cause rotation thereof. However, in this case, a braking assembly (denoted generally at 36) is provided between the hydraulic motor 30 and the gearbox 34. The braking assembly 36 comprises a bell housing 38 concentrically mounted about the drive shaft 30a. A machined drive coupling 40 is provided within the housing 38, having a recess 40a at one end for receiving the drive shaft 30a, and a shaft member 40b at the opposing end for coupling to the gearbox 34. A seal and plate assembly 41 is provided between the coupling 40 and the gearbox 34. Thus, the braking assembly 36 is arranged and configured to rotate with the drive shaft 30a and transmit that rotational force to the gearbox 34. The coupling 40 is provided with a concentric disc member 42 which extends circumferentially around an outer wall of the coupling 40 at the end corresponding to the recess 40a in which the drive shaft 30a is received. The disc member 42 extends substantially vertically beyond the outer circumference of the coupling to define a flange. A brake calliper or shoe 44 is mounted adjacent the inner wall of the housing 38 and comprises a pair of clamping members, connected across the top and with a recess therebetween for accommodating the disc member 42. In the position shown, the brake shoe or calliper 44 is disengaged from the disc member 42 and the assembly is free to rotate in accordance with operation of the motor 30. The brake shoe or calliper 44 is configured for movement from the disengaged configuration illustrated to a second configuration in which the clamping members frictionally engage with the disc member 42 and thereby obstruct rotation thereof.

In an exemplary embodiment, the brake 'shoe, may be mounted for linear movement in a direction substantially orthogonal to the axis of rotation of the drive system. In this case, when the brake is actuated, the brake shoe moves linearly toward the outer circumference of the disc member 42 until the inner walls of the recess are in frictional engagement therewith, thereby obstructing rotation thereof. However, in an alternative exemplary embodiment, the braking action may comprise opposing mechanical forces (substantially parallel to the axis of rotation of the drive system) applied to the clamping members such that hey are forced into frictional engagement with the opposing side walls of the disc member 42, thereby, once again, obstructing rotation thereof.

In an exemplary embodiment, the brake member 42 is normally frictionally engaged with the disc member 42, and actuation thereof causes it to become disengaged and permit free rotation of the drive system. In an alternative exemplary embodiment, the brake member 44 is normally disengaged from the disc member 42, and actuation thereof causes it to become frictionally engaged therewith so as to obstruct rotation thereof.

It will be appreciated that there are a number of different ways in which the brake member 44 can be actuated. For example, it is envisaged that mechanical actuation means may be provided, that requires selective manual operation. Thus, for example, a lever, pedal, switch or other manual actuator may be provided that requires a mechanical force for operation. A transmission cable, such as a Bowden cable, may be provided that couples the actuator to the braking assembly and is configured to transmit the mechanical actuation force to the brake member 44 to move it from the engaged to the disengaged position, or vice versa depending on the configuration of the braking assembly. Alternatively, the brake member may be actuated by hydraulic means (via, for example, a hand pump) or pneumatic means, which may be part of the existing in-transit mixing assembly or specially provided for the braking assembly. In yet another exemplary embodiment, a status determination module may be provided which is configured to monitor a status of the vehicle and/or in-transit mixer. For example, such a module may be configured to determine when the vehicle engine is stopped or the motor of the drive system is switched off (or the power thereto is switched off or in neutral state), and generate a signal accordingly. That signal may be transmitted to an actuation module configured to actuate the brake mechanism in response thereto, to engage or disengage the brake member 44, depending on the configuration of the braking assembly.

It will be appreciated by a person skilled in the art, from the foregoing description, that modifications and variations can be made to the described embodiments without departing from the scope of the invention as defined by the appended claims. For example, the brake member may be provided in respect of any rotary element of the mixer assembly. In an exemplary embodiment of the invention, the rotatable drum may comprise a circumferential track ring, and the braking assembly may comprise at least one brake member located adjacent said track ring and configured for linear movement between a first position is which it frictionally engages with the track ring and obstructs rotational movement of the drum, and a second position in which the brake member is disengaged from the track ring and the drum is free to rotate. In this case, the braking assembly may comprise a pair of opposing brake members, located on each side of the drum adjacent the track ring, wherein the brake members may be configured for linear movement between a first position is which they frictionally engage with the track ring and obstruct rotational movement of the drum, and a second position in which the brake members are disengaged from the track ring and the drum is free to rotate.

In another exemplary embodiment, the braking assembly may comprise a circumferential flange or protrusion provided on, or formed integrally with, an outer wall of the drum, and a brake member arranged and configured for selective linear movement between a first position, in which it frictionally engages with the flange or protrusion and obstructs rotation of the drum, and a second position in which it is disengaged from the flange or protrusion and the drum is free to rotate.

Whilst the braking assembly according to an exemplary embodiment of the present invention has been described above with specific reference to a braking member arranged and configured for selective frictional engagement with the rotatable drum, or an element thereof, or a drive coupling between the motor and the gear assembly, the present invention is not necessarily intended to be limited in this regard. For example, the braking member may be configured to selectively engage a rotating shaft 30a of the drive system; or the braking member may be arranged and configured to selectively engage the gear assembly 34 to apply a braking force thereto (in the form of a gear brake, for example).

In yet another exemplary embodiment, the braking member may be configured to selectively engage, either directly or indirectly, the power take-off (PTO) shaft driving the water pump 32. Thus, the braking member could be located between the PTO output and the water pump 32, or an additional shaft installation could be provided, whereby the PTO shaft is effectively extended to project in two directions with the water pump 32 at one end and a braking member located at the other end. Indeed, it is envisaged that in other exemplary embodiments, a mirrored PTO or other shaft from the gearbox may be provided for the express purpose of locating a braking member thereat.

## Claims

1. A braking assembly for an in-transit mixer comprising a rotatable drum coupled to a drive system, the braking assembly comprising a brake member arranged and configured for movement between a first position, in which it engages with a rotating element of said mixer so as to apply a braking force thereto, and a second position, in which it is disengaged from said rotating element, an actuating member located remotely from said brake member, and a transmission member coupling said actuating member to said brake member and configured such that actuation of said actuating member generates a mechanical force that is transmitted via said transmission member to said brake member to move said braking member between said first and second positions.

2. A braking assembly according to claim 1, wherein the brake member comprises a brake shoe or calliper configured to frictionally engage with said rotary element when in the first position; and/or wherein the brake member comprises a calliper located in or on the drive system, wherein the calliper is configured to frictionally engage with a rotary element of the drive system when in the first position, and optionally wherein the calliper is arranged and configured to frictionally engage with the above-mentioned rotary element at any location on its circumference.

3. A braking assembly according to any of the preceding claims, wherein said rotating element comprises a power take-off shaft driving a water pump, and said brake member is configured to, directly or indirectly, engage with and disengage from said power take-off shaft, and optionally wherein said brake member is located adjacent to, and for selective engagement with and disengagement from, said shaft between a power take-off and said water pump.

4. A braking assembly according to any of the preceding claims, wherein the drive system comprises a motor coupled via a shaft to a gear assembly, and wherein the braking assembly is located between the motor and the gear assembly, and optionally comprising a drive coupling for coupling said shaft of said motor to said gear assembly.

5. A braking assembly according to claim 4, wherein a brake disc is provided substantially concentrically on the drive coupling, for rotation therewith, and a brake calliper is arranged and configured to frictionally engage with the outer circumference of the brake disc in the first position.

6. A braking assembly according to claim 5, wherein the brake member comprises a shoe or calliper configured for linear movement between the first and second positions in a direction substantially orthogonal to the axis of rotation of the shaft; or wherein the brake member comprises a calliper comprising a pair of clamping members, connected at one end and defining a recess therebetween, and optionally wherein the clamping members are configured for opposing linear movement between the first and second positions in a direction generally parallel to the axis of rotation of the shaft.

7. A braking assembly according to any of claims 4 to 6, further comprising a housing mounted substantially concentrically about the shaft.

8. A braking assembly according to claim 1 or claim 2, wherein said rotatable drum comprises a circumferential track ring, and the braking assembly comprises at least one brake member located adjacent said track ring and configured for linear movement between a first position is which it frictionally engages with the track ring and obstructs rotational movement of the drum, and a second position in which the brake member is disengaged from the track ring and the drum is free to rotate; and optionally wherein the braking assembly comprises a pair of opposing brake members, located on each side of the drum adjacent the track ring, wherein the brake members are configured for linear movement between a first position is which they frictionally engage with the track ring and obstruct rotational movement of the drum, and a second position in which the brake members are disengaged from the track ring and the drum is free to rotate.

9. A braking assembly according to any of the preceding claims, comprising a circumferential flange or protrusion provided on, or formed integrally with, an outer wall of the drum, and a brake member arranged and configured for selective linear movement between a first position, in which it frictionally engages with the flange or protrusion and obstructs rotation of the drum, and a second position in which it is disengaged from the flange or protrusion and the drum is free to rotate.

10. A braking assembly according to any of the preceding claims, wherein the actuating member comprises a manually operated mechanical operating member, wherein, in use, a mechanical force generated by actuation of said operating member is transmitted via said transmission member to said brake member to move said brake member between said first and second positions.

11. A braking assembly according to any of claims 1 to 9, wherein the actuating member is hydraulically or pneumatically operable; and/or comprising a control module or status detection module for generating a signal indicative of a status or condition of the in-transit mixer or vehicle, wherein the signal is transmitted to the actuating member and configured to operate the actuating member accordingly.

12. A braking assembly according to any of the preceding claims, wherein the brake member is normally in the first position and the actuating member, when actuated, is configured to move the braking member from the first position to the second position; or wherein the brake member is normally in the second position and the actuating member, when actuated, is configured to move the brake member from the second position to the first position.

13. A braking assembly according to claim 1, wherein said drive system comprises a hydraulic motor having a rotatable shaft, and said braking member is arranged and configured for movement between a first position, in which it causes a braking force to be applied to said rotatable shaft, and a second position in which said braking force is removed.

14. A braking assembly according to claim 1, wherein said drive system comprises a motor having a rotatable shaft and a gear assembly coupled between said rotatable shaft and said rotatable drum, and said braking member comprises a gear brake arranged and configured for movement between a first position, in which it engages with the gear assembly and applies a braking force thereto, and a second position, in which it is disengaged from said gear assembly.

15. An in-transit mixer assembly comprising a rotatable drum, a drive system for rotating said drum and a braking assembly according to any of the preceding claims.
